# EUROPEAN PATENT SPECIFICATION

(11) **EP 3 698 900 B1**
(45) Date of publication and mention of the grant of the patent: **10.05.2023**
(21) Application number: 19210143.4
(22) Date of filing: 19.11.2019
(51) Int. Cl.: B22F 3/23, B22F 3/15, B22F 3/24, C22C 30/00, B33Y 10/00, B33Y 70/00, B22F 5/04, B22F 10/10, B22F 10/20, B22F 5/00, B22F 5/10, C22C 1/04, B22F 10/34

(54) **METHOD FOR IDENTIFYING AND FORMING VIABLE HIGH ENTROPY ALLOYS VIA ADDITIVE MANUFACTURING**
VERFAHREN ZUR IDENTIFIZIERUNG UND FORMUNG VON REALISIERBAREN HOCHENTROPISCHEN LEGIERUNGEN DURCH GENERATIVE FERTIGUNG
PROCÉDÉ D'IDENTIFICATION ET DE FORMATION D'ALLIAGES À ENTROPIE ÉLEVÉE VIABLES PAR FABRICATION ADDITIVE

(30) Priority: 20.02.2019 US 201916280990
(43) Date of publication of application: 26.08.2020
(73) Proprietor: Hamilton Sundstrand Corporation, Charlotte, NC 28217-4578 (US)
(72) Inventor: MIRONETS, Sergey, Burlington, Ontario L7R 0E9 (CA); MARTIN, Thomas J., East Hampton, CT 06424 (US); STAROSELSKY, Alexander, Avon, CT 06001 (US)
(74) Representative: Dehns

(56) References cited:
- CN-A- 105 886 812
- CN-A- 108 504 889
- CN-B- 104 368 814
- US-A1- 2004 057 861
- SANIN V N ET AL: "SHS metallurgy of high-entropy transition metal alloys", DOKLADY PHYSICAL CHEMISTRY.DOKLADY AKADEMII NAUK USSR, CONSULTANTS BUREAU, NEW YORK, NY, US, vol. 470, no. 2, 5 November 2016 (2016-11-05), pages 145-149, XP036089988, ISSN: 0012-5016, DOI: 10.1134/S001250161610002X [retrieved on 2016-11-05]
- KASHAEV NIKOLAI ET AL: "Laser beam welding of a CoCrFeNiMn-type high entropy alloy produced by self-propagating high-temperature synthesis", INTERMETALLICS, ELSEVIER SCIENCE PUBLISHERS B.V, GB, vol. 96, 20 March 2018 (2018-03-20), pages 63-71, XP085369201, ISSN: 0966-9795, DOI: 10.1016/J.INTERMET.2018.02.014
- SENKOV O N ET AL: "Compositional variation effects on the microstructure and properties of a refractory high-entropy superalloy AlMo0.5NbTa0.5TiZr", MATERIALS AND DESIGN, vol. 139, 21 November 2017 (2017-11-21), pages 498-511, XP085321531, ISSN: 0264-1275, DOI: 10.1016/J.MATDES.2017.11.033

## Description

### TECHNICAL FIELD

The disclosure relates generally to high entropy alloys (HEA) and more specifically to processes for identifying viable high entropy alloys and forming them into useful components by way of additive manufacturing.

### BACKGROUND

Many advanced high temperature alloys, due to thermodynamic or other limitations, often consist of one or two primary components (e.g., nickel-based superalloys, titanium aluminide, etc.) with small amounts (e.g., no more than about 15% and often less) of multiple alloying elements to tailor particular mechanical, thermal, and/or microstructural properties). In contrast, high entropy alloys have a larger number (e.g., 4 or more) of constituents in roughly equal percentages. For most combinations, this causes microstructural instability for reasons that should be apparent to a skilled artisan familiar with materials science or other related fields.

At the same time, certain narrow combinations of elements have been identified which would fall within the range of an HEA, but exhibit a higher level of stability as well as excellent properties exceeding those seen in conventional superalloys. Yet those alloys have to date been infeasible to produce into useful components due to the inability to post-process without locally disturbing the narrowly stable microstructure.

Previous methods known to produce partially stable HEA structures have taken two forms. The first involves providing a preform, adding the molten alloy which is then solidified and subjected to hot isostatic processing (HIP). Despite this, the microstructure is inconsistent and porosity remains an impediment to a useful, stable part. Another known approach with its own shortcomings involves a preform then forging the finished part. Like the first, the issues of severe porosity and inconsistent microstructure remain. Both of these manufacturing processes are not yet able to produce complex shaped parts.

Roughly 70% of High Entropy Alloys (HEA) microstructure studies characterize as-cast alloys. The vast majority of the HEAs development approaches are based on ad-hoc alloy design rules, which require corroboration by experiments. The experiments are limited by solubility of alloying elements for producing homogenous materials without macro segregation. There is a need for developing an economical process for development of new generation of HEA. HEA components are described in SANIN V. N. et al.: "SHS metallurgy of high-entropy transition metal alloys", DOKLADY PHYSICAL CHEMISTRY; Vol. 470, Part 2, 5 November 2016 (2016-11-05), pages 145 - 149 XP036089988 ISSN:0012-5016; and in KASHAEV NIKOLAI et al.: 'Laser beam welding of a CoCrFeNiMn-type high entropy alloy produced by self-propagating high-temperature synthesis", INTERMETALLICS, Vol. 96, 20 March 2018, pages 63-71, XP085369201, ISSN: 0966-9795, and in CN 108504889 A and CN 105886812 A.

### SUMMARY

The invention is defined by claim 1 as a method for making a component including a high entropy alloy (HEA).

### BRIEF DESCRIPTION OF THE DRAWINGS

FIG. 1 is a first flow chart illustrating a first non-limiting example embodiment of the method
FIG. 2 is a second flow chart illustrating a second non-limiting example embodiment of the method.

### DETAILED DESCRIPTION

Generally speaking, the disclosure combines Additive Manufacturing (AM) and Self-propagating high temperature synthesis (SHS), or its derivative processes for the production of HEAs in complex shapes. First, we create a cake using precursor HEA and SHS process. The cake can be ground and the resulting powder can be further spheroidized and used for printing 3D objects. Alternatively, thoroughly blended fine HEA powders can be placed inside a 3D printed capsule. The powder is then ignited and a combustion wave propagates through the blended powder fully consolidating the material.

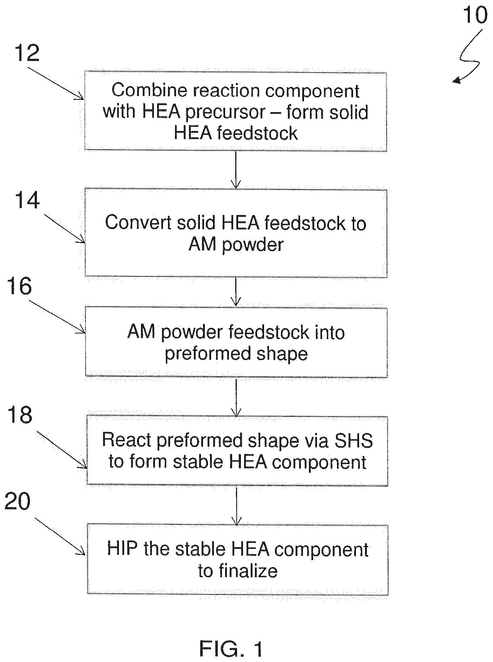

FIG. 1 shows example method 10, steps for making a component comprising a high entropy alloy (HEA). As noted above, high entropy alloys are an emerging class of materials. Due to their nature, it is difficult to identify promising candidate compositions which exhibit excellent physical properties often exceeding those of conventional alloys and even many superalloys. It is even more difficult, once formed, to process these materials into useful shapes as conventional mechanical processing techniques destabilize the delicate balance of the nanophases metastable grain boundaries, and atomic-level interactions that make the materials possible in the first place.

Method 10 includes step 12 of combining a reaction component with a powdered HEA precursor to form a solid HEA feedstock. Common examples of HEA precursors take many forms but in most cases involve a combination of 4 or more compatible metal elements that will eventually react to form the final HEA component in to something approximating or equivalent to desired shape. The inventive method is restricted to the HEA alloys defined in claim 1. The HEA elements themselves may be reactive, but perhaps not enough to facilitate an SHS reaction, therefore, additional reaction component(s) can be added to facilitate the reaction of the elements in the powdered HEA precursor. Examples are based on the particular selection of HEA chemistry but common reaction components can include nickel, aluminum, titanium, cobalt, chromium, iron, manganese, molybdenum, niobium, tantalum, tungsten, zirconium and vanadium, but many other combinations of elements can be considered, including refractory metals and ceramics.

Though it can be called a "cake" or "puck", the solid HEA feedstock can actually take any common form suitable for step 14, which is to convert the solid HEA feedstock into a powder suitable for use as a powder feedstock in an additive manufacturing device. Here, processing includes, but is not limited to grinding, rolling, and/or spheroidizing.

Once in suitable form, step 16 includes additively manufacturing at least a portion of the powder feedstock into a preformed shape approximating a desired shape of the component. As is known, AM processes can vary somewhat widely, particularly based on the composition of the powder and the parameters selected.

As part of, or subsequent to step 16, step 18 is to react or ignite the powdered HEA precursor and the reaction component in the preformed shape to induce a self-propagating high-temperature synthesis (SHS) reaction, which propagates throughout the entire preform to produce a dense bonded structure, thereby forming a stable HEA component approximating the desired shape as described above. The reaction can take many forms but in this free-form embodiment, sufficient heat and pressure are generated to further consolidate the freeform powder preformed shape once the reaction is initiated.

One of the HEA components according to the inventive method includes at least a combination of niobium, molybdenum, tantalum, and tungsten. In certain embodiments, the stable HEA component further includes vanadium. Each of the defined elements is present in approximately equivalent molar percentages. This means that variations up to +/- 2 mol % for one or more elements, due to process tolerances and/or optimization of certain microstructures may occur.

Another HEA component according to the inventive method includes at least a combination of aluminum, titanium, zirconium, niobium, molybdenum, and tantalum. Aluminum, titanium, zirconium, niobium, each have a first molar percentage, and the molybdenum and tantalum each have a second molar percentage. Each first molar percentage is approximately equivalent, and each second molar percentage is approximately half of each of the first molar percentage. In other words the molar percentages of molybdenum and tantalum add up to the first molar percentage.

Optionally, the stable HEA component only approximates the desired shape, porosity, or other properties and can only be subjected to limited post-processing that will not unduly disturb the delicate balance of atomic-level interactions. One allowable step is performing a hot isostatic processing (HIP) step 20 on at least the stable HEA component to finalize the stable HEA component into the desired shape. To facilitate one or more HIP steps 20, the stable HEA component can be placed in a mold which may itself be additively manufactured.

As noted, it has been extremely difficult and/or unreliable to produce complex shapes from HEA alloys as they are not amenable to conventional post-processing or even conventional additive manufacturing. Sometimes the freeform approach described relative to FIG. 1 is not entirely suitable or reliable due to the desired component shape being sufficiently complex.

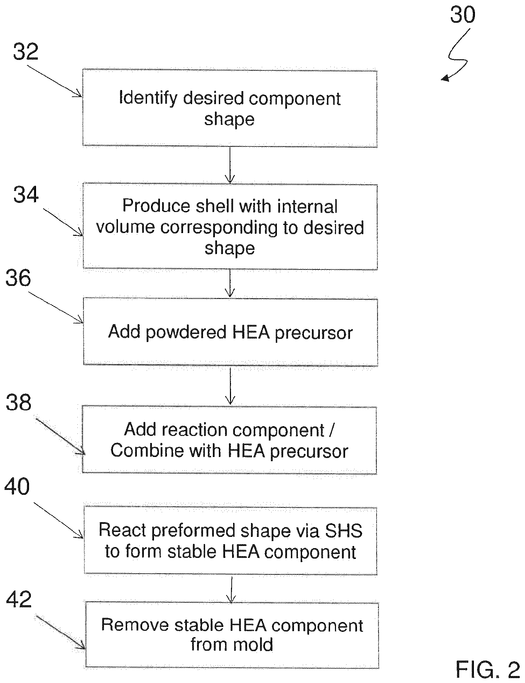

Thus moving to Fig. 2 not according to the present invention; method 30 for making a component with a HEA includes step 32 of identifying a desired shape of the component. Step 34 then includes producing a shell or a mold having an interior volume corresponding to the desired shape of the component via at least one additive manufacturing process. This corresponding interior shape can be an approximation or a precise negative of the desired component shape.

For step 36, a powdered HEA precursor is added to the interior volume of the shell or the mold, and around an internal core if needed, before, during or after which, a reaction component is added with the powdered HEA precursor (step 38) to form a preformed shape. This reaction component is configured to facilitate a self-propagating high-temperature synthesis (SHS) reaction with the powdered HEA precursor of step 36. Examples of these materials are generally similar to those described relative to FIG. 1.

Once combined, step 40 includes reacting the combined powdered HEA precursor and the SHS component in the shell or mold, and internal core if needed, thereby forming a stable HEA component from the preformed shape. The mold or shell helps retain the contours of the preformed shape during and immediately after the reaction so that the stable HEA component at least approximates the desired shape of the component when complete, until it can be removed from the shell or the mold (step 42). Any residual shell or mold, or internal core if present, can be removed by any of a variety of processes including burn-out, acid or caustic leaching.

Similar to the freeform approach, method 30 can also include optionally performing a hot isostatic processing (HIP) step on at least the stable HEA component. The HIP step can be performed prior to and/or after the removing step.

The resulting stable HEA component can have similar or identical compositions to those described relative to example method 10 / FIG. 1. In this case, however, the more ability to produce and maintain more complex shapes out of the shells and molds would make the process suitable for gas turbine or other very high temperature components. This is especially true as some HEA materials have been shown to have high temperature mechanical properties that can exceed those of superalloys currently in use. Thus the ability to form more complex shapes is likely to allow for parts such as combustor liner or a turbine airfoil for a gas turbine engine to be reliably made with HEA materials.

Further, internal cooling of these and other parts can likely be incorporated, for example by forming an internal core around which the combined powdered HEA precursor and the SHS component are placed prior to the reacting step. After removing the core from the stable HEA component, it defines at least one internal cooling passage therein.

### Discussion of Possible Embodiments

The following are non-exclusive descriptions of possible embodiments of the present disclosure.

An example embodiment of a method is disclosed for making a component including a high entropy alloy (HEA). The method includes combining a reaction component with a powdered HEA precursor to form a solid HEA feedstock. The solid HEA feedstock is converted into a powder suitable for use as a powder feedstock in an additive manufacturing device and capable of sustaining a self-propagating high-temperature synthesis (SHS) reaction. At least a portion of the powder feedstock is additively manufactured into a preformed shape approximating a desired shape of the component. The preformed shape is filled with the HEA powder feedstock. The powdered HEA precursor in the preformed shape are ignited to induce the self-propagating high-temperature synthesis (SHS) reaction, thereby forming a stable HEA component approximating the desired shape.

The method of the preceding paragraph can optionally include, additionally and/or alternatively, any one or more of the following features, configurations and/or additional components: An embodiment of a method for making a component comprising a high entropy alloy (HEA), the method comprising: combining a reaction component with a powdered HEA precursor to form a solid HEA feedstock; converting the solid HEA feedstock into a powder suitable capable of sustaining a self-propagating high-temperature synthesis (SHS) reaction for use as a powder feedstock in an additive manufacturing device; additively manufacturing at least a portion of the powder feedstock into a preformed shape approximating a desired shape of the component; filling the preformed shape with the HEA powder feedstock; and igniting the powdered HEA precursor in the preformed shape to induce a self-propagating high-temperature synthesis (SHS) reaction, thereby forming a stable HEA component approximating the desired shape.

A further embodiment of the foregoing method, further comprising: performing a hot isostatic processing (HIP) step on at least the stable HEA component to finalize the stable HEA component into the desired shape.

A further embodiment of any of the foregoing methods, wherein the HIP step is performed in a mold after the reacting step.

A further embodiment of any of the foregoing methods, wherein the mold is additively manufactured to match the desired shape.

According to the invention, the stable HEA component comprises niobium, molybdenum, tantalum, and tungsten each in up to equivalent molar percentages.

A further embodiment of any of the foregoing methods, wherein the stable HEA component further comprises vanadium also in up to equivalent molar percentages of niobium, molybdenum, tantalum, and tungsten.

Alternatively, according to the invention, the stable HEA component comprises nickel, cobalt, chromium, iron, aluminum, titanium, zirconium, niobium, molybdenum, and tantalum

wherein the aluminum, titanium, zirconium, niobium, each have a first molar percentage, and the molybdenum and tantalum each have a second molar percentage, wherein each first molar percentage is approximately equivalent, and wherein each second molar percentage is approximately half of each of the first molar percentage.

A further embodiment of any of the foregoing methods, wherein the filling step includes the HEA powder feedstock and an additional reaction component, and the igniting step also includes igniting the additional reaction component.

An example not according to the invention as defined in claim 1 is disclosed for making a component including a high entropy alloy (HEA). The method includes identifying a desired shape of the component and producing a shell or a mold having an interior volume corresponding to the desired shape of the component via at least one additive manufacturing process. A reaction component is added to the interior volume of the shell or the mold and combined with the powdered HEA precursor. The reaction component is configured to facilitate a self-propagating high-temperature synthesis (SHS) reaction with the powdered HEA precursor. The combined powdered HEA precursor and the SHS component are ignited in the shell or mold, thereby forming a stable HEA component approximating the desired shape of the component. The stable HEA component is removed from the shell or the mold.

The method of the preceding paragraph can optionally include, additionally and/or alternatively, any one or more of the following features, configurations and/or additional components: identifying a desired shape of the component; An embodiment of a method for making a component comprising a high entropy alloy (HEA), the method comprising: producing a shell or a mold having an interior volume corresponding to the desired shape of the component via at least one additive manufacturing process; adding a powdered HEA precursor to the interior volume of the shell or the mold; combining a reaction component with the powdered HEA precursor, the reaction component configured to facilitate a self-propagating high-temperature synthesis (SHS) reaction with the powdered HEA precursor; and igniting the combined powdered HEA precursor with the reaction component to initiate a SHS reaction in the powder contained by the shell or mold, thereby forming a stable HEA component approximating the desired shape of the component; and removing the stable HEA component from the shell or the mold.

A further embodiment of the foregoing method, further comprising: performing a hot isostatic processing (HIP) step on at least the stable HEA component.

A further embodiment of any of the foregoing methods, wherein the HIP step is performed prior to the removing step.

A further embodiment of any of the foregoing methods, wherein the HIP step is performed after the removing step.

According to the invention, the the stable HEA component comprises niobium, molybdenum, tantalum, and tungsten each in approximately equivalent molar percentages.

A further embodiment of any of the foregoing methods, wherein the stable HEA component further comprises vanadium also in an approximately equivalent molar percentage to the molar percentages of niobium, molybdenum, tantalum, and tungsten.

Alternatively, according to the invention, the stable HEA component comprises aluminum, titanium, zirconium, niobium, molybdenum, and tantalum

the aluminum, titanium, zirconium, niobium, each have a first molar percentage, and the molybdenum and tantalum each have a second molar percentage, wherein each first molar percentage is approximately equivalent, and wherein each second molar percentage is approximately half of each of the first molar percentage.

A further embodiment of any of the foregoing methods, wherein the desired shape of the component includes a combustor liner or a turbine airfoil for a gas turbine engine.

A further embodiment of any of the foregoing methods, further comprising forming a core around which the combined powdered HEA precursor and the SHS component are placed prior to the reacting step.

A further embodiment of any of the foregoing methods, further comprising removing the core from the stable HEA component, thereby defining at least one internal passage therein.

While the invention has been described with reference to an exemplary embodiment(s), it will be understood by those skilled in the art that various changes may be made and equivalents may be substituted for elements thereof without departing from the scope of the invention as defined by the claims. Therefore, it is intended that the invention not be limited to the particular embodiment(s) disclosed, but that the invention will include all embodiments falling within the scope of the appended claims.

## Claims

1. A method for making a component comprising a high entropy alloy, HEA, the method comprising:
combining a reaction component with a powdered HEA precursor to form a solid HEA feedstock, the reaction component being a component that facilitates the reaction of the elements in the powdered HEA precursor;
convert the solid HEA feedstock into a powder suitable capable of sustaining a self-propagating high-temperature synthesis, SHS, reaction for use as a powder feedstock in an additive manufacturing device;
additively manufacturing at least a portion of the powder feedstock into a preformed shape approximating a desired shape of the component;
filling the preformed shape with the HEA powder feedstock; and
igniting the powdered HEA precursor in the preformed shape to induce a self-propagating high-temperature synthesis, SHS, reaction, thereby forming a stable HEA component approximating the desired shape;
wherein the stable HEA component comprises niobium, molybdenum, tantalum and tungsten each in approximately equivalent molar percentages with variations of +/- 2 mol %, or, wherein the stable HEA component comprises
aluminum, titanium, zirconium,
niobium, molybdenum, and tantalum, and wherein the aluminum, titanium, zirconium, niobium, each have a first molar percentage, and the molybdenum and tantalum each have a second molar percentage, wherein each first molar percentage is equivalent with variations of +/- 2 mol %, and wherein each second molar percentage is half of each of the first molar percentage with variations of +/- 2 mol %.

2. The method of claim 1, further comprising:
performing a hot isostatic processing, HIP, step on at least the stable HEA component to finalize the stable HEA component into the desired shape.

3. The method of claim 2, wherein the HIP step is performed in a mold after the reacting step, and preferably wherein the mold is additively manufactured to match the desired shape.

4. The method of any preceding claim, wherein the filling step includes the HEA powder feedstock and an additional reaction component, and the igniting step also includes igniting the additional reaction component.

5. The method of any preceding claim, wherein the stable HEA component is the component comprising niobium, molybdenum, tantalum and tungsten and further comprises vanadium also in an equivalent molar percentage to the molar percentages of niobium, molybdenum, tantalum, and tungsten with variations of +/- 2 mol %.

6. The method of any preceding claim, wherein the desired shape of the component includes a combustor liner or a turbine airfoil for a gas turbine engine.

## Patentansprüche

1. Verfahren zum Herstellen einer Komponente, die eine hochentropische Legierung, HEA, umfasst, wobei das Verfahren umfasst:
Kombinieren einer Reaktionskomponente mit einem pulverförmigen HEA-Vorläufer, um ein festes HEA-Ausgangsmaterial zu bilden, wobei die Reaktionskomponente eine Komponente ist, die die Reaktion der Elemente in dem pulverförmigen HEA-Vorläufer ermöglicht;
Umwandeln des festen HEA-Ausgangsmaterials in ein geeignetes Pulver, das in der Lage ist, eine Reaktion für selbstpropagierende Hochtemperatursynthese, SHS, zur Verwendung als ein Pulverausgangsmaterial in einer Vorrichtung zur generativen Fertigung zu durchlaufen;
generatives Fertigen von mindestens einem Teil des Pulverausgangsmaterials zu einer vorgeformten Form, die einer gewünschten Form der Komponente angenähert ist;
Füllen der vorgeformten Form mit dem HEA-Pulverausgangsmaterial; und
Zünden des pulverförmigen HEA-Vorläufers in der vorgeformten Form, um eine Reaktion für selbstpropagierende Hochtemperatursynthese, SHS, einzuleiten und auf diese Weise eine stabile HEA-Komponente zu bilden, die an die gewünschte Form angenähert ist; wobei die stabile HEA-Komponente Niob, Molybdän, Tantal und Wolfram jeweils in ungefähr äquivalenten Molanteilen mit Abweichungen von +/- 2 Mol-% umfasst, oder wobei die stabile HEA-Komponente Aluminium, Titan, Zirconium, Niob, Molybdän und Tantal umfasst und wobei das Aluminium, das Titan, das Zirconium und das Niob jeweils einen ersten Molanteil aufweisen und das Molybdän und das Tantal jeweils einen zweiten Molanteil aufweisen, wobei jeder erste Molanteil mit Abweichungen von +/-2 Mol-% äquivalent ist, und wobei jeder zweite Molanteil die Hälfte des jeweiligen ersten Molanteils mit Abweichungen von +/-2 Mol-% ist.

2. Verfahren nach Anspruch 1, ferner umfassend:
Durchführen eines Schritts von heißisostatischer Verarbeitung, HIP, an mindestens der stabilen HEA-Komponente, um die HEA-Komponente endgültig in die gewünschte Form zu bringen.

3. Verfahren nach Anspruch 2, wobei der HIP-Schritt nach dem Reaktionsschritt in einer Gussform durchgeführt wird, und wobei die Gussform vorzugsweise in Anpassung an die gewünschte Form generativ gefertigt ist.

4. Verfahren nach einem der vorhergehenden Ansprüche, wobei der Füllschritt das HEA-Pulverausgangsmaterial und eine zusätzliche Reaktionskomponente beinhaltet und der Zündschritt auch Zünden der zusätzlichen Reaktionskomponente beinhaltet.

5. Verfahren nach einem der vorhergehenden Ansprüche, wobei die stabile HEA-Komponente die Komponente ist, die Niob, Molybdän, Tantal und Wolfram umfasst, und ferner Vanadium ebenfalls in einem zu den Molaranteilen von Niob, Molybdän, Tantal und Wolfram äquivalenten Molanteil mit Abweichungen von +/- 2 Mol-% umfasst.

6. Verfahren nach einem der vorhergehenden Ansprüche, wobei die gewünschte Form der Komponente eine Brennkammerauskleidung oder ein Turbinenschaufelblatt für ein Gasturbinentriebwerk beinhaltet.

## Revendications

1. Procédé de fabrication d'un composant comprenant un alliage à haute entropie, HEA, le procédé comprenant :
la combinaison d'un composant de réaction avec un précurseur de HEA en poudre pour former une charge d'alimentation de HEA solide, le composant de réaction étant un composant qui facilite la réaction des éléments dans le précurseur de HEA en poudre ;
la conversion de la charge d'alimentation de HEA solide en une poudre appropriée capable de supporter une réaction de synthèse à haute température auto-propagée, SHS, pour une utilisation en tant que charge d'alimentation en poudre dans un dispositif de fabrication additive ;
la fabrication de manière additive d'au moins une partie de la charge d'alimentation en poudre en une forme préformée se rapprochant d'une forme souhaitée du composant ;
le remplissage de la forme préformée avec la charge d'alimentation de HEA en poudre ; et
l'allumage du précurseur de HEA en poudre sous la forme préformée pour induire une réaction de synthèse à haute température auto-propagée, SHS, formant ainsi un composant HEA stable se rapprochant de la forme souhaitée ;
dans lequel le composant HEA stable comprend du niobium, du molybdène, du tantale et du tungstène chacun dans des pourcentages molaires approximativement équivalents avec des variations de +/- 2 % en moles, ou, dans lequel le composant HEA stable comprend
de l'aluminium, du titane, du zirconium, du niobium, du molybdène et du tantale, et dans lequel l'aluminium, le titane, le zirconium, le niobium ont chacun un premier pourcentage molaire, et le molybdène et le tantale ont chacun un second pourcentage molaire, dans lequel chaque premier pourcentage molaire est équivalent avec des variations de +/- 2 % en moles, et dans lequel chaque second pourcentage molaire est la moitié de chacun des premiers pourcentages molaires avec des variations de +/- 2 % en moles.

2. Procédé selon la revendication 1 comprenant en outre :
la réalisation d'une étape de traitement isostatique à chaud, HIP, sur au moins le composant HEA stable pour finaliser le composant HEA stable dans la forme souhaitée.

3. Procédé selon la revendication 2, dans lequel l'étape HIP est réalisée dans un moule après l'étape de réaction, et de préférence dans lequel le moule est fabriqué de manière additive pour correspondre à la forme souhaitée.

4. Procédé selon une quelconque revendication précédente, dans lequel l'étape de remplissage comporte la charge d'alimentation en poudre de HEA et un composant de réaction supplémentaire, et l'étape d'allumage comporte également l'allumage du composant de réaction supplémentaire.

5. Procédé selon une quelconque revendication précédente, dans lequel le composant HEA stable est le composant comprenant du niobium, du molybdène, du tantale et du tungstène et comprend en outre du vanadium également en un pourcentage molaire équivalent aux pourcentages molaires de niobium, molybdène, tantale et tungstène avec des variations de +/- 2 % en moles.

6. Procédé selon une quelconque revendication précédente, dans lequel la forme souhaitée du composant comporte une chemise de chambre de combustion ou un profil aérodynamique de turbine pour un moteur à turbine à gaz.
